# EUROPEAN PATENT SPECIFICATION

(11) **EP 1 697 234 B1**
(45) Date of publication and mention of the grant of the patent: **11.01.2012**
(21) Application number: 04797490.2
(22) Date of filing: 30.11.2004
(51) Int. Cl.: B65D 88/36, B65D 90/42, E04H 4/06, A01C 3/02

(54) **A FLOATING TAG FOR THE REDUCTION OF EVAPORATION FROM LIQUID RESERVOIRS**
SCHWIMMKÖRPER ZUR VERRINGERUNG DER VERDUNSTUNG AUS FLÜSSIGKEITSRESERVOIRS
ELÉMENT DE FLOTTAISON PERMETTANT DE REDUIRE L'EVAPORATION DANS DES RESERVOIRS DE LIQUIDES

(30) Priority: 16.12.2003 DK 200301861; 14.01.2004 DK 200400035
(43) Date of publication of application: 06.09.2006
(73) Proprietor: Hexa-Cover ApS, 7700 Thisted (DK)
(72) Inventor: FROEKJAER, Troels, DK-7755 Bedsted (DK)
(74) Representative: Poulsen, Carsten Stechnik
(86) International application number: PCT/DK2004/000831
(87) International publication number: WO 2005/058730

(56) References cited:
- DE-A1- 2 646 084
- DE-A1- 3 418 255
- DE-A1- 3 927 616
- DE-C- 833 325
- GB-A- 1 520 793
- US-A- 4 270 232

## Description

The invention relates to a floating tab for the reduction of the evaporation from liquid reservoirs, such as manure containers, wherein the profile of the floating tab in the vertical plane increases from the edge of the tab toward the centre of the tab, the basic shape of the floating tab in the horizontal floating plane is triangular, quadrangular or hexagonal, while the height variation in the vertical plane is produced by ribs.

It is generally known that evaporation from manure tanks constitutes an ever increasing environmental problem. In this connection, it is both the impact on the surroundings from the vapours and the obnoxious smells for the neighbours which are problematic.

Several methods of reducing the evaporation from manure tanks are known. DE 3418255 thus discloses a method and a product in the form of hexagonal floating modules which are attached to each other by means of some embedded pins and are placed on the liquid surface, thereby covering it, thus reducing the evaporation.

In the document DE 3927616 A1 a floating tab is disclosed which has a circular shape in the horizontal plane and with a plane circular edge overlapping the neighbouring floating tab to reduce evaporation from a manure tank.

A floating tab, as defined in the introductory part of claim 1, is disclosed in US patent No. 4,270,232.

It has been found, however, that this prior art involves some drawbacks, partly because the handling of the product is time-consuming and thereby labour intensive, as all the hexagonal modules must be attached to each other via the embedded pins, and also because the embedding of the attachment pins is a costly element of the manufacturing process.

Accordingly, an object of the invention is to improve the known floating tab.

The object of the invention is achieved by a floating tab of the type stated in the introductory portion of claim 1, which is characterized in that the floating tab comprises outer sides which are configured such that the floating tabs disposed edge-to-edge overlap each other symmetrically, and in that the floating tab has integrated buoyancy ball which may be fully or partly hollow and air-filled and thereby improves the buoyancy of the floating tab, wherein the buoyancy ball has its centre in the mass centre of the floating tab.

Hereby, it is thus possible to cover a liquid surface, e.g. in a manure container, without having to join the individual modules, which makes the covering process considerably less labour intensive than in the previously known prior art. At the same time, the product may be made simpler and thereby less expensive to manufacture, as the product does not have to be provided with means for joining the individual modules.

It is moreover ensured that the elements, due to the overlapping faces of contact, are very resistant to weather conditions, such as strong wind, without being disassembled.

As stated in the introductory part of claim 1 the profile of the floating elements in the vertical plane increases from the edge of the element toward the centre of the element.

This provides the advantage that the elements cannot be stacked, which means that they will not lie on top of each other, but slide away from each other until, as intended, they all float on the liquid surface and just touch each other side edge against side edge.

As stated in claim 2, the edges have contact faces that are adapted to connect the floating tab to the contact faces of another floating tab, and that the contact faces have a first part adapted to be connected to an overlapping part on another floating tab, and a second part that is adapted to be overlapped by another part on another floating tab.

As stated in claim 3, the edges have inclined contact faces that are adapted to connect the floating tab to the inclined contact faces of another floating tab in the same manner as stated in claim 2.

As stated in claim 4, the floating tab is provided with means for identification, such as RFID tags.

The invention will now be explained more fully with reference to the drawing, in which
- fig. 1: shows a product configured as a triangle, in several projections,
- fig. 2: shows a product configured as a quadrangle, in several projections,
- fig. 3: shows a product configured as a hexagon, in several projections,
- fig. 4: shows a floating tab floating on a liquid surface,
- fig. 5: shows a floating tab seen in perspective obliquely from above,
- fig. 6: shows a floating tab with a hexagonal basic shape modified on the outer edges such that identical adjacent floating tab will overlap each other symmetrically,
- fig. 7: shows a section seen from the side of the modified floating tab shown in fig. 6,
- fig. 8: shows how three identical, hexagonal floating tabs with modified outer faces will overlap each other when they are pressed against each other,
- fig. 9: shows a hexagonal floating tab with outer faces which will overlap each other when they are pressed against each other,
- fig. 10: shows a hexagonal floating tab with hexagonally shaped ribs, while
- fig. 11: shows a hexagonal floating tab according to the invention with the integrated buoyancy ball.

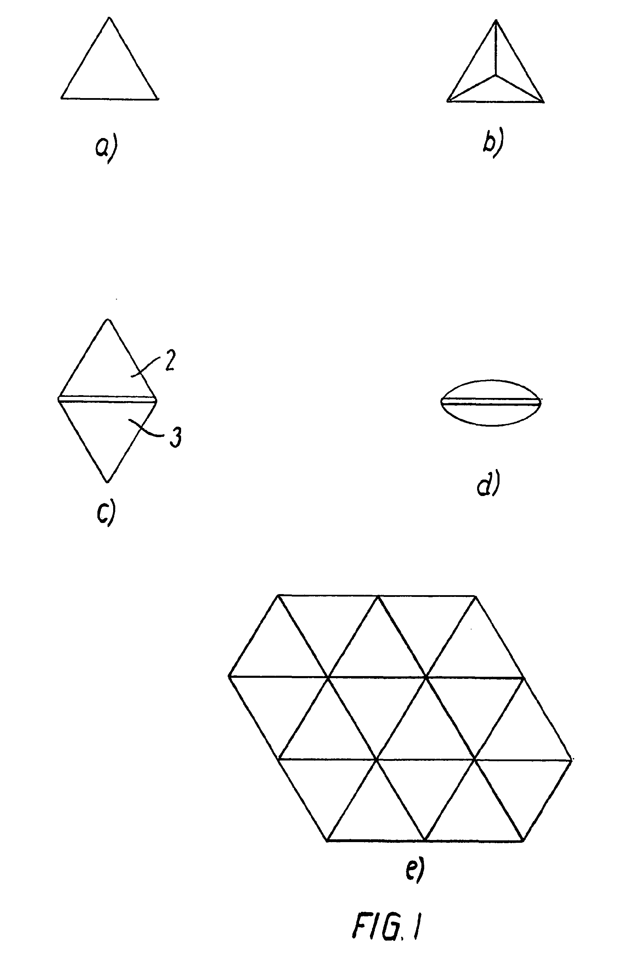

Fig. 1A shows a triangular product, seen from above, to cover a liquid surface.

Fig. 1B, like 1A and in the same pictorial perspective, shows a triangular product, where it is stressed drawing-wise that the profile of the product changes from the edge toward the centre.

Fig. 1c shows the same product as is shown in fig. 1B, but seen from the side, where 1 is the centre of the product in the vertical plane in which the product will float when it is placed on a liquid surface, and 2 is the shape of the product above the liquid surface, while 3 is the shape of the product below the liquid surface.

The shapes 2 and 3 are characterized in that the profile, as seen from the side in fig. 1C, increases in the vertical plane from the edge of the product toward the centre of the product. This ensures that two or more products cannot be stacked, as they will slide from each other until all of them float on the liquid surface.

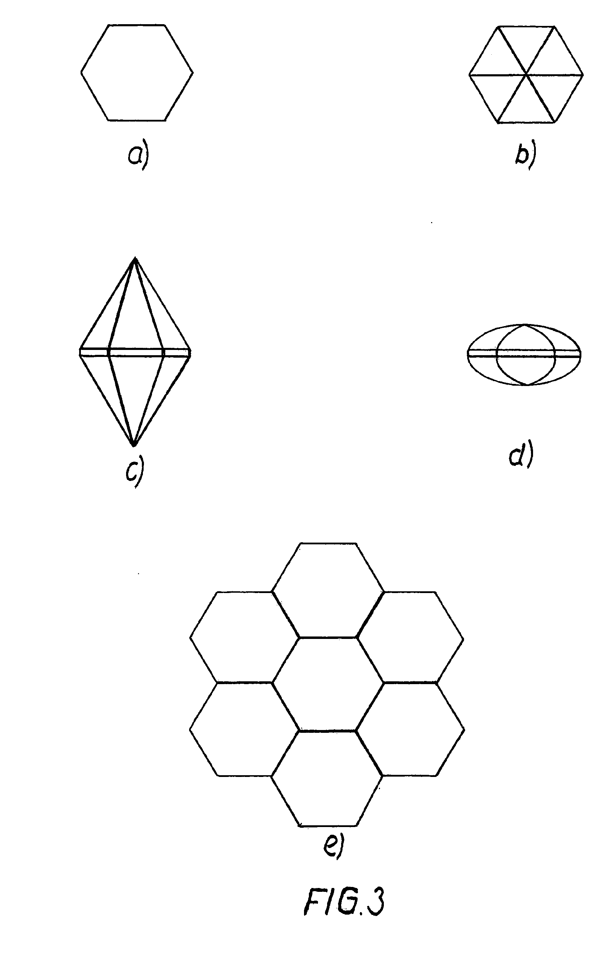

Fig. 3D, too, shows a triangular product seen from the side like fig. 1C, but here the height variation in the vertical plan is reduced relative to the product shown in fig. 3C. A reduced height ensures that less material is used, which allows the manufacturing costs to be reduced.

It is shown in fig. 1E, seen from above, how 16 identical, triangular products together may form an unbroken face for effective covering of a liquid surface. The prerequisites for the covering to be optimum are that a sufficient number of products are supplied to the liquid surface so that these may cover the entire area of the liquid surface, and that the angles of the triangles are the same, i.e. 60 degrees.

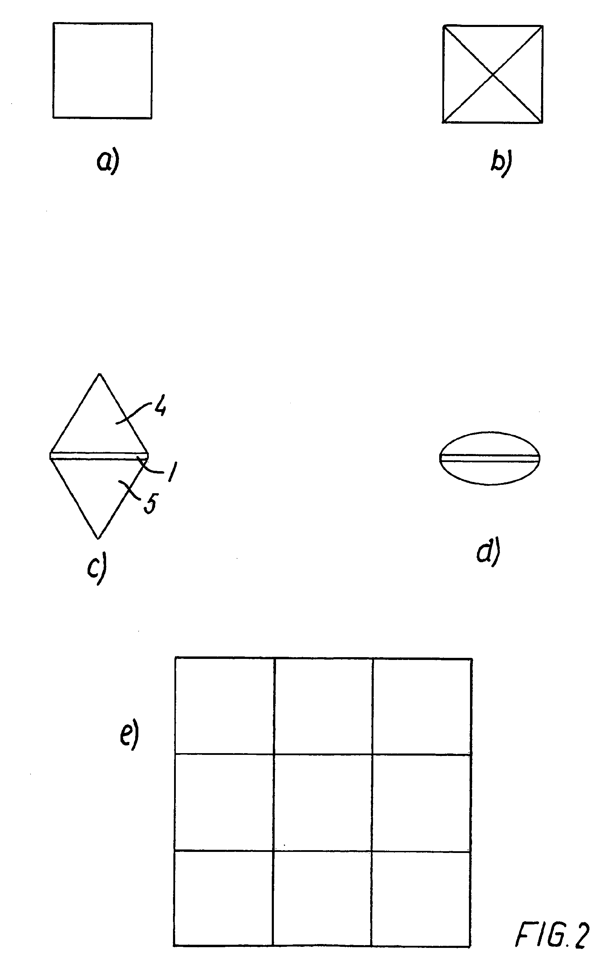

Fig. 2A shows a quadrangular product, seen from above.

Fig. 2B, like fig. 2A, shows a quadrangular product with drawing-wise stressing of the change of the profile of the product from the edge toward the centre.

Fig. 2C shows the same product as is shown in 2B, but now seen from the side, where 1 shows the floating plane, and 2 shows the profile of the product above the liquid surface, while 3 shows the profile below the liquid surface. It appears from fig. 2C, like in fig. 1C, how the profile increases from the edge toward the centre, which, in this case too, serves the purpose of preventing stacking of several products on top of each other.

Fig. 3D shows the same profile as fig. 2D, but in a variant where the profile height change is smaller than in fig. 2C, with the consequent advantages by way of lower consumption of materials.

Fig. 2E shows how 9 identical, quadrangular products together may form an effective cover of a liquid surface. The effective cover requires that the products are supplied to the liquid surface in a sufficiently large number so that they may cover the entire area of the liquid surface.

Another prerequisite for the quadrangular modular products to be used in a simple and effective manner for covering is that the quadrangular shape is square. If e.g. the shape is rectangular, an effective cover will require that the individual products are placed in a specific pattern in order to cover effectively, without air gaps between the individual elements.

Fig. 3 shows in 3A to 3D a hexagonal product, cf. the previously mentioned shapes in figs. 1 and 3 for a triangular and a quadrangular product configuration, respectively. The arguments for the hexagonal product are analogous with those used in the description for figs. 2 and 3.

It is shown in fig. 3E how 7 identical, hexagonal products together may cover a liquid surface so that the evaporation from it is reduced effectively. A prerequisite for the cover to be optimum is that a sufficient number of product units are supplied so that these may cover the entire liquid surface, and that the hexagon is truly hexagonal, i.e. that the angles are identical.

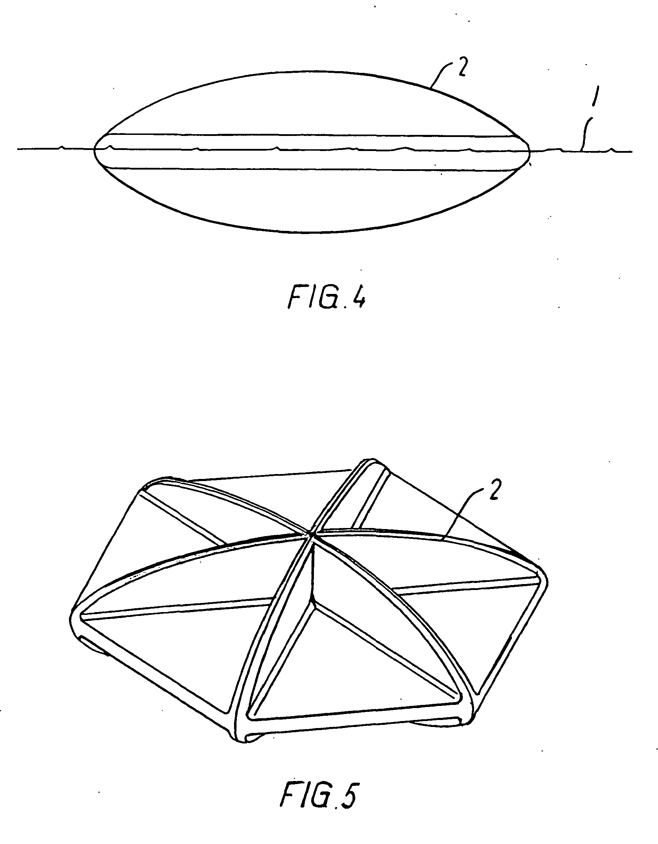

Fig. 4 shows a floating tab 1 seen from the side, which floats on a liquid surface 1. As will be seen, the tab floats in the expedient example shown such that one half of the floating tab is above the liquid surface, while the other half is below the liquid surface. This requires that the specific gravity of the product is 0.5 times the specific gravity of the liquid.

If the floating tab is made of a polymer, such as a polypropylene or a polyethylene, the specific gravity may be adjusted by foaming the material to integral foam. The specific gravity of the material may hereby be reduced to about 0.5, which is expedient for manure covering, as manure has a specific gravity of about 1.

When the resulting specific gravity of the material is kept lower than the specific gravity of the liquid in which it is to be used, it is also ensured that the floating tab will float and thereby still function in full or in part even if it is physically damaged.

Fig. 5 shows an example a floating tab.

The product is illustrated seen obliquely from above.

As will appear from fig. 5, the floating tab is hexagonal in the horizontal floating plane while the height variation in the vertical plane is produced by ribs 2.

As mentioned before, the height difference in the horizontal plane serves the purpose of ensuring that several floating tabs cannot be stacked, but will slide away from each other and will thereby float in parallel on the liquid surface.

The necessary height difference may be made in an unbroken, solid material, of course, which may be hollow if appropriate, or be provided internally with a water-displacing, light material, such as e.g. an expandable polystyrene.

However, several advantages are achieved by providing ribs, as shown in fig. 5, since these require a minimum consumption of materials and may be made by a simple manufacturing process, which, in combination, results in low manufacturing costs, which thus makes the product extremely competitive.

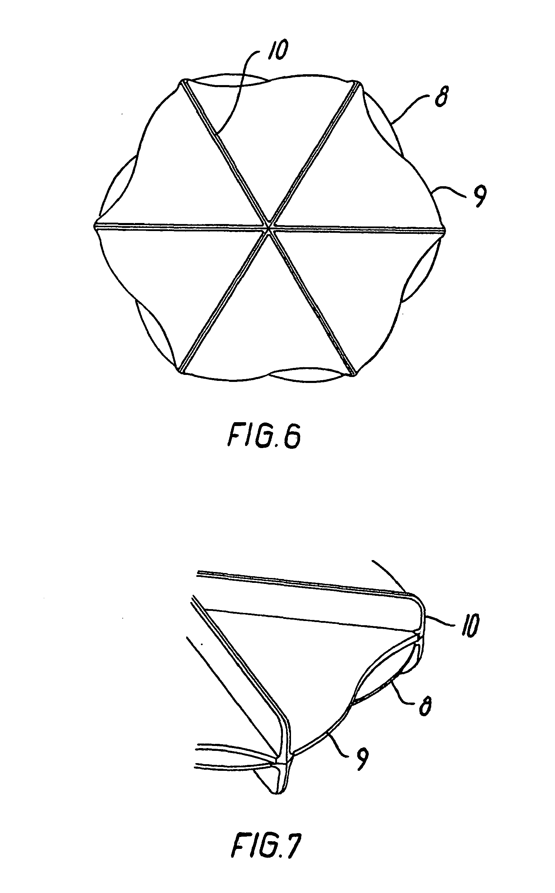

Fig. 6 shows an example of a floating tab where the side faces, which must be capable of being connected with adjacent elements, are configured such that two elements being interconnected will overlap each other symmetrically in the contact face. If two or more elements are interconnected, each side face will have a part 4 which is overlapped by a counterpart, as well as a part 5 which overlaps the same counterpart. This ensures that interconnected elements can better maintain the interconnection at external impacts from e.g. windy weather.

Fig. 7 shows a section of the same object as shown in fig. 6, from which it appears clearly via the illustration perspective how the edges are made, such that objects in contact with each other will overlap each other symmetrically.

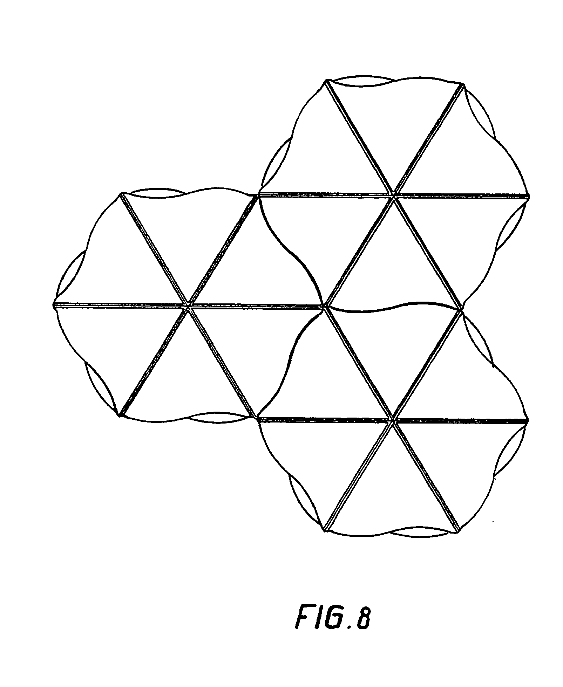

Fig. 8 shows how three elements are interconnected with mutual, symmetrical overlap in the contact faces where the side edges are configured as shown in fig. 6 and fig. 7.

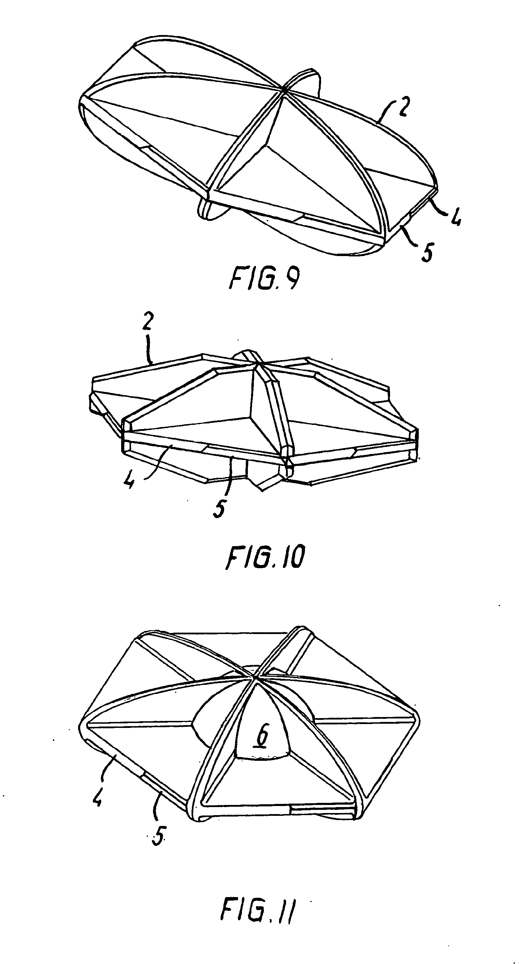

Fig. 9 shows a floating tab with inclined side faces 4 and 5, which will overlap the corresponding, opposed, inclined side faces from adjacent floating tabs which are touched, in the same manner as explained with reference to fig. 6 to fig. 8.

Fig. 10 shows a floating tab with the same type of inclined side faces as is also illustrated in fig. 9, but where the ribs 2 are shaped hexagonally.

Fig. 11 shows a floating tab according to the invention with inclined side faces 4 and 5 for mutual overlapping of adjacent floating tabs which are touched, and with an integrated buoyancy ball 6 which may be fully or partly hollow and air-filled and thereby improves the buoyancy of the floating tab.

The buoyancy ball has its centre in the mass centre of the floating tab.

Of course, the floating tab may be used for covering other liquids than manure. It may e.g. be used for covering tanks or fish farms breeding fish or shellfish, where the cover will be able to reduce not only the evaporation from the liquid reservoirs, but will also have a temperature-insulating effect on these. Since the water temperature may be an essential parameter for the growth rates of the fish or the shellfish, it may be important to keep a given temperature in such breeding environments.

The floating tab may also be used for reducing the evaporation from polluting liquids, such as petrol which, e.g., is spilled from a tanker and is confined by a floating barrier.

The floating tab may be coloured, if expedient, e.g. black or white in connection with thermal regulation and luminescent orange in connection with covering of polluting liquids in floating barriers.

In the practical realization of the floating tab, it is expedient to make it in a physical size which prevents the tab from being sucked into pipe systems, thereby blocking or damaging the system, including e.g. pumps.

Further, in a preferred embodiment, the floating tab may be made with an incorporated identification unit, e.g. in the form of a so-called RFID tag.

It is likewise part of the present invention that the coverage degree of the floating tabs of the surface to be covered, is determined.

The coverage degree may be determined e.g. via vision technology based on image processing of data from one or more digital cameras or by positional determination of the RFID tags incorporated in the floating tabs.

Since the coverage degree is indicative of the coverage efficiency, including the reduction of the evaporation of liquid, a current determination of the coverage degree may be used in documentation of the coverage efficiency.

## Claims

1. Floating tab for the reduction of the evaporation from liquid reservoirs, such as manure containers wherein the profile of the floating tab in the vertical plane increases from the edge of the tab toward the centre of the tab, the basic shape in the horizontal floating plane is triangular, quadrangular or hexagonal, while the height variation in the vertical plane is produced by ribs (2), **characterized in that** the floating tab comprises outer sides which are configured such that floating tabs disposed edge-to-edge overlap each other symmetrically, and **in that** the floating tab has an integrated buoyancy ball (6) which may be fully or partly hollow and air-filled and thereby improves the buoyancy of the floating tab, wherein the buoyancy ball has its centre in the mass centre of the floating tab.

2. Floating tab according to claim 1, **characterized in that** its edges have contact faces that are adapted to connect the floating tab to the contact faces of another floating tab, said contact faces having a first part (8) adapted to be connected to an overlapping part (9) on another floating tab, and a second part (9) that is adapted to overlap another part (8) on another floating tab.

3. Floating tab according to claim 1, **characterized in that** its edges have inclined contact faces that are adapted to connect the floating tab to the inclined contact faces of another floating tab, said faces having a first part (4) adapted to be connected to an overlapping part (5) on another floating tab, and a second part (5) that is adapted to overlap another part (4) on another floating tab.

4. Floating tab according to claims 1-3, **characterized in that** the floating tab is provided with means for identification, such as RFID tags.

## Patentansprüche

1. Schwimmkörper zur Verringerung der Verdunstung aus Flüssigkeitsreservoirs, wie etwa Düngemittelbehältern, wobei das Profil des Schwimmkörpers in der vertikalen Ebene von dem Rand des Körpers zum Zentrum des Körpers zunimmt und die Grundform in der horizontalen Schwimmebene dreieckig, quadratisch oder sechseckig ist, während die Höhenänderung in der vertikalen Ebene durch Rippen (2) hervorgerufen ist, **dadurch gekennzeichnet, dass** der Schwimmkörper Außenseiten enthält, die derart beschaffen sind, dass sich Schwimmkörper, die Rand an Rand angeordnet sind, einander symmetrisch überlappen, und dass der Schwimmkörper eine integrierte Auftriebskugel (6) hat, die vollständig oder teilweise hohl und mit Luft gefüllt sein kann und dadurch den Auftrieb des Schwimmkörpers verbessert, wobei die Auftriebskugel ihr Zentrum in dem Massenzentrum des Schwimmkörpers hat.

2. Schwimmkörper nach Anspruch 1, **dadurch gekennzeichnet, dass** seine Ränder Kontaktflächen haben, die dazu eingerichtet sind, den Schwimmkörper mit den Kontaktflächen eines weiteren Schwimmkörpers zu verbinden, wobei die Kontaktflächen einen ersten Teil (8), der dazu eingerichtet ist, mit einem überlappenden Tell (9) an einem weiteren Schwimmkörper verbunden zu werden, und einen zweiten Teil (9) enthalten, der dazu eingerichtet ist, mit einem weiteren Teil (8) an einem weiteren Schwimmkörper zu überlappen.

3. Schwimmkörper nach Anspruch 1, **dadurch gekennzeichnet, dass** dessen Ränder geneigte Kontaktflächen haben, die dazu eingerichtet sind, den Schwimmkörper mit den geneigten Kontaktflächen eines weiteren Schwimmkörpers zu verbinden, wobei die Flächen einen ersten Teil (4), der dazu eingerichtet ist, mit einem überlappenden Teil (5) an einem weiteren Schwimmkörper verbunden zu werden, und einen zweiten Teil (5) haben, der dazu eingerichtet ist, einen weiteren Teil (4) an einem weiteren Schwimmkörper zu überlappen.

4. Schwimmkörper nach Anspruch 1 bis 3, **dadurch gekennzeichnet, dass** der Schwimmkörper mit Einrichtungen zur Kennzeichnung, wie etwa RFID-Markierungen, versehen ist.

## Revendications

1. Elément flottant permettant de réduire l'évaporation dans des réservoirs de liquide, tels que des conteneurs de fumier dans lequel le profil de l'élément flottant dans le plan vertical augmente à partir du bord de l'élément vers le centre de l'élément, la forme de base dans le plan de flottaison horizontal est triangulaire, quadrangulaire ou hexagonale, alors que la variation de hauteur dans le plan vertical est produite par des ailettes (2), **caractérisé en ce que** l'élément flottant comprend des côtés extérieurs qui sont configurés de sorte que les éléments flottants disposés bord à bord se chevauchent les uns les autres symétriquement, et **en ce que** l'élément flottant a une balle de flottaison (6) intégrée qui peut être entièrement ou partiellement creuse et remplie d'air et qui améliore ainsi la flottabilité de l'élément flottant, dans lequel la balle de flottaison a son centre au centre de masse de l'élément flottant.

2. Elément flottant selon la revendication 1, **caractérisé en ce que** ses bords ont des faces de contact qui sont adaptées pour raccorder l'élément flottant aux faces de contact d'un autre élément flottant, lesdites faces de contact ayant une première partie (8) adaptée pour être raccordée à une partie en chevauchement (9) sur un autre élément flottant, et une seconde partie (9) qui est adaptée pour chevaucher une autre partie (8) sur un autre élément flottant.

3. Elément flottant selon la revendication 1, **caractérisé en ce que** ses bords ont des faces de contact inclinées qui sont adaptées pour raccorder les éléments flottants aux faces de contact inclinées d'un autre élément flottant, lesdites faces ayant une première partie (4) adaptée pour être raccordée à une partie en chevauchement (5) sur un autre élément flottant, et une seconde partie (5) qui est adaptée pour chevaucher une autre partie (4) sur un autre élément flottant.

4. Elément flottant selon les revendications 1 à 3, **caractérisé en ce que** l'élément flottant est doté de moyens d'identification, tels que des étiquettes d'identification par radiofréquence.
